# EUROPEAN PATENT SPECIFICATION

(11) **EP 2 481 992 B1**
(45) Date of publication and mention of the grant of the patent: **03.04.2013**
(21) Application number: 11000636.8
(22) Date of filing: 27.01.2011
(51) Int. Cl.: F24D 19/10, G05D 7/01, G05D 16/06, G05D 27/00

(54) **Combined valve arrangement**
Anordnung einer Ventilkombination
Agencement d'une combinaison de vannes

(43) Date of publication of application: 01.08.2012
(73) Proprietor: Danfoss A/S, 6430 Nordborg (DK)
(72) Inventor: Christensen, Morten Hedegaard, 8963 Auning (DK); Bjerggaard, Niels, 8370 Hadsten (DK)
(74) Representative: Knoblauch, Andreas

(56) References cited:
- WO-A1-2006/046793
- DE-B3- 10 256 035
- US-B2- 7 735 514

## Description

The invention relates to a valve arrangement comprising a valve housing having an inlet and an outlet, a flow control valve arranged between the inlet and the outlet, a pressure regulating valve arranged between the inlet and the flow control valve, wherein the pressure regulating valve and the flow control valve are mounted in the valve housing through a common mounting opening, the pressure regulating valve being mounted detachably in the housing.

Such a valve arrangement is known from US 7 735 514 B2. The valve housing has an opening through which in a first step the pressure regulating valve is inserted and in a second step the flow control valve is inserted. This has the advantage that only one sealing is necessary to seal the interior of the valve housing against the outside. However, repairing of such a valve arrangement is complicated. Although it is simple to remove the flow control valve by unthreading a locking nut it is difficult to remove the pressure regulating valve thereafter.

DE 102 56 035 B3 shows another valve arrangement having almost the same functions. In this valve arrangement the pressure regulating valve and the flow control valve are mounted from opposite sides in the valve housing. In this case it is possible to push the pressure regulating valve out of the housing when the flow control valve has been removed. However, such an embodiment needs more sealing means and a more complicated machining of the housing.

WO 2006/046793 A1 shows a regulator to regulate pressure of high-pressure gas discharged from a gas bombe. The gas bombe is fixed to a gas supply valve of the housing so that gas discharged from the gas bombe can flow through said gas supply valve to a pressure regulating valve and then through a flow control valve controlling the flow of the gas to a lower nozzle in the housing. All components of this regulator are inserted through a common opening into the housing which is closed by a bottom plate 28.

The task underlying the invention is to facilitate maintenance of the valve arrangement.

This task is solved with a valve arrangement of the kind mentioned above in that the pressure regulating valve comprises a tool fixing geometry allowing a demounting tool to be fastened to said pressure regulating valve.

Such a valve arrangement combines the advantages of a valve arrangement disclosed in US 7 735 514 B2 and a valve arrangement disclosed in DE 102 56 035 B3. The pressure regulating valve and the flow control valve can be mounted through the same opening so that only one sealing means is necessary. However, the pressure regulating valve can easily be removed when it is necessary. When it is necessary to demount the pressure regulating valve the flow control valve is removed and a demounting tool can be connected to the pressure regulating valve. Thereafter it is possible to pull the pressure regulating valve out of the housing by means of the demounting tool. Since the pressure regulating valve has a fixing geometry at which the demounting tool can be fastened there is no risk of damaging the pressure regulating valve when the demounting tool is used to pull the pressure regulating valve out of the housing.

In a preferred embodiment the tool fixing geometry is made as a thread. When it is necessary to remove the pressure regulating valve from the housing the demounting tool is simply screwed into the pressure regulating valve. When the thread connection has been established it is strong enough to pull the pressure regulating valve out of the valve housing even if there is some friction.

In an alternative embodiment the tool fixing geometry is made as part of a bayonet joint. In this case the demounting tool is simply inserted into the pressure regulating valve and turned once by a predetermined angle so that it is connected to the pressure regulating valve. Such a bayonet joint allows quick connection between the demounting tool and the pressure regulating valve.

Preferably the pressure regulating valve comprises a regulating valve element and a regulating valve seat, wherein the fixing geometry is positioned at the regulating valve element. The regulating valve element is in most cases accessible in a simple way so that it is not necessary to make the demounting tool complicated. The demounting tool can be made as a simple rod having the counter part to the tool fixing geometry at one end.

Preferably the pressure regulating valve comprises a pressure regulating housing having a bore, the regulating valve element having an end passing through said bore, and said end being connected to a fixing element having a diameter which is larger than the diameter of the bore. In this case when the demounting tool is fixed to the regulating valve element and the regulating valve element is subjected to a force in a direction out of the valve housing the fixing element comes to rest at the regulating valve housing transmitting a force to said regulating valve housing which is sufficient to pull the regulating valve housing out of the valve housing.

Preferably the pressure regulating valve comprises a membrane, said membrane being fixed at said regulating valve element by means of said fixing element. In this case the fixing element is used for two purposes. One purpose is to connect the membrane to the regulating valve element. The second purpose is to transmit demounting forces from the regulating valve element to the regulating valve housing.

Preferably the fixing element and the regulating valve element are connected by a rivet like connection. An example for such a connection is that the regulating valve element is provided with a stud and an end of the stud protrudes through the fixing element. This end is crimped so that a rivet head is produced holding the fixing element at the regulating valve element. Other fixations are possible. If plastic material is used, a fixation means could be a self-cutting screw.

In a preferred embodiment a radially outer part of the membrane forms a seal which is arranged between the valve housing and the regulating valve housing and sealing a first chamber which is connected to the inlet from a second chamber which is connected to the outlet. The membrane forms the complete barrier between the two chambers. No further sealing means is necessary.

Furthermore, it is preferably that the flow control valve comprises a control valve element and a control valve seat which is arranged at a seat element, said seat element being connected to said pressure regulating valve. In this case the control valve seat can be handled independently from the rest of the flow control valve. This facilitates the exchange of the control valve seat when it is necessary.

Preferably the seat element and the pressure regulating valve are connected by means of a thread connection or a crimp connection. Both connections can easily be established and allow the mounting of the regulating valve together with the seat element.

In a preferred embodiment the flow control valve comprises pre-adjustment means, said pre-adjustment means acting on the pressure regulating valve and holding the pressure regulating valve in the valve housing. When the flow control valve is fixed in the housing the pressure regulating valve is secured in a predetermined position and cannot change this position.

A preferred embodiment of the invention will now be described in more detail with reference to the drawing, wherein:
- Fig. 1: shows a section through a valve arrangement,
- Fig. 2: shows a detail A of Fig. 1 and
- Fig. 3: shows the valve arrangement in an exploded view.

A valve arrangement 1 comprises a valve housing 2 having an inlet 3 and an outlet 4. A flow control valve 5 is arranged between the inlet 3 and the outlet 4. The flow control valve 5 has a control valve element 6 and a control valve seat 7. The control valve seat 7 is arranged at a seat element 8.

The control valve element 6 is positioned at a lower end (as shown in the drawing) of a valve spindle 9. The valve spindle 9 is loaded by a spring 10 in an opening direction.

The flow control valve 5 comprises a control valve housing 11 which is threaded into the valve housing 2 of the valve arrangement 1. A pre-adjustment means 12 is arranged within the control valve housing 11 and comprises a wall 13 extending in circumferential direction and surrounding the control valve element 6. The wall 13 has an axial length varying in circumferential direction so that the wall 13 forms a rotary gate. Depending on the angular position of the pre-adjustment means 12 a passage between the flow control valve 5 and the outlet 4 is more or less opened.

The valve arrangement 1 further comprises a pressure regulating valve 15. This pressure regulating valve 15 comprises a regulating valve housing 16 forming a regulating valve seat 17 and a regulating valve element 18 which is shown in an opening condition, i.e. an opening between the regulating valve element 18 and the regulating valve seat 17 is at a maximum.

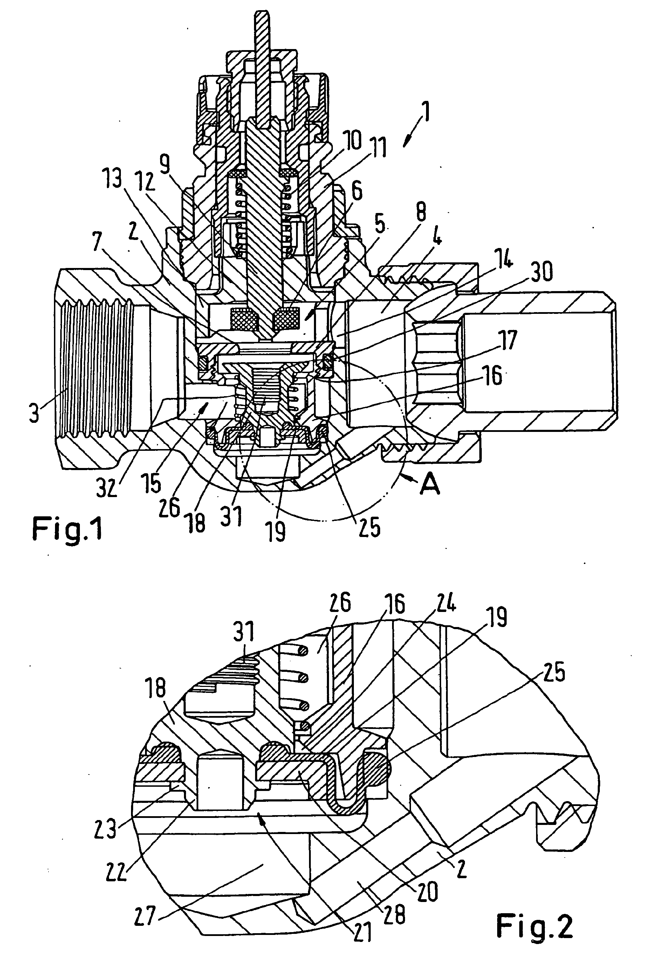

As can be seen in Fig. 2 the regulating valve element 18 is connected to a membrane 19. The membrane 19 is fixed to the regulating valve element 18 with help of a fixing means 20. The fixing means 20 is connected to the regulating valve element 18 with a rivet like connection 21. To this end the regulating valve element 18 has a stud 22 protruding through the fixing means 20 and having a crimped collar 23 holding the fixing means 20 against the regulating valve element 18.

The regulating valve element 18 passes through a bore 24 in the regulating valve housing 16. The diameter of the fixing means 20 is larger than the diameter of the bore 24. Therefore, the regulating valve element 18 can be moved into an opening direction of the pressure regulating valve 15 only to a position in which the membrane 19 is clamped between the fixing means 20 and the regulating valve housing 16. No further movement relative to the regulating valve housing 16 is possible.

The membrane 19 comprises a sealing ring 25 formed integrally with the rest of the membrane 19. This sealing ring 25 forms a seal between the regulating valve housing 16 and the valve housing 2 and separates a first chamber 26 which is connected to the inlet 3 from a second chamber 27 which is connected to the outlet 4 via a channel 28.

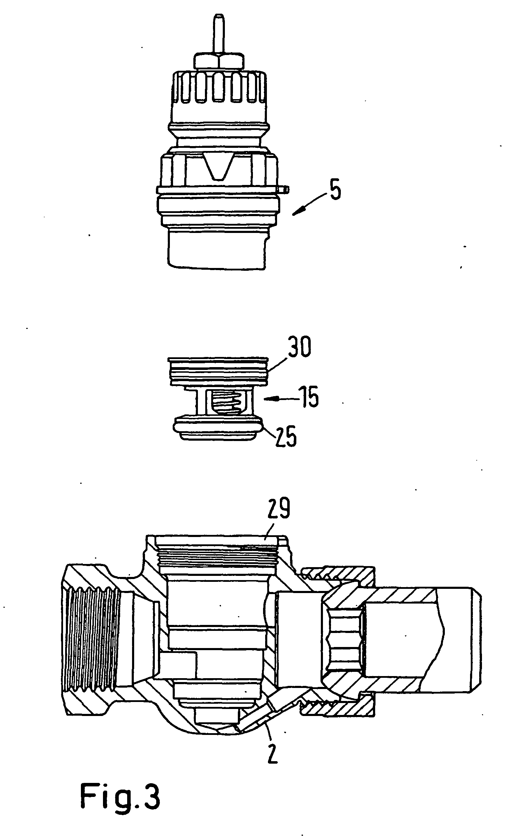

As can be seen in Fig. 3 the pressure regulating valve 15 and the flow control valve 5 are inserted into the housing 2 via a common opening 29. In other words the pressure regulating valve 15 and the flow control valve 5 are mounted from the same direction. This has the advantage that only one opening, namely the opening 29 must be sealed to the outside. However, it has the draw back that the pressure regulating valve 5 is difficult to remove once it is mounted in the valve housing 2. The sealing ring 25 of the membrane 19 and a further sealing ring 30 between the regulating valve housing 16 and the valve housing 2 are responsible for holding the pressure regulating valve 15 in the valve housing 2 with a rather high friction.

In order to be able to demount the pressure regulating valve 15 from the valve housing the regulating valve element 18 is provided with a tool fixing geometry 31. The tool fixing geometry allows a demounting tool (not illustrated) to be fastened to the pressure regulating valve 15. Once the demounting tool is in engagement with the tool fixing geometry 31 the pressure regulating valve 15 can easily be moved out of the valve housing 2 when the demounting tool is pulled out of the valve housing 2.

In the present embodiment the tool fixing geometry 31 has the form of a thread. The demounting tool can easily be threaded into the regulating valve element 18.

Another possibility is to form the tool fixing geometry as part of a bayonet joint. In this case the demounting tool is inserted into the regulating valve element 18 and turned by a predetermined angle like a bayonet. Thereafter, it is possible to pull out the pressure regulating valve 15.

Although the demounting tool engages the regulating valve element 18 only the whole pressure regulating valve 15 can be removed from the valve housing 2 since the fixing element 20 transmits the drawing force to the regulating valve housing 16.

The seat element 8 is secured to the regulating valve housing 16. In the present example this connection is made as threaded connection, i.e. the seat element 8 is threaded onto the regulating valve housing 16. It is also possible to use a crimp connection between the seat element 8 and the regulating valve housing 16.

Other functions of the valve arrangement 1 are known per se. The pressure regulating valve 15 adjusts an opening between the regulating valve element 18 and the regulating valve seat 17 so that a pressure drop over the flow control valve 5 is kept constant. To this end the regulating valve element 18 is loaded by a spring 32 in an opening direction. The pressure at the inlet 3 acts on the regulating valve element 18 in opening direction and the pressure in the outlet 4 acts on the regulating valve element 18 in closing direction.

The pressure regulating valve 15 is held in place in the valve housing 2 by means of the wall 13 of the pre-adjustment means 12. Once the flow control valve 5 is mounted there is no possibility for the pressure regulating valve 15 to move within the valve housing 2.

## Claims

1. A valve arrangement (1) comprising: a valve housing (2) having an inlet (3) and an outlet (4), a flow control valve (5) arranged between the inlet (3) and the outlet (4), a pressure regulating valve (15) arranged between the inlet (3) and the flow control valve (5), wherein the pressure regulating valve (15) and the flow control valve (5) are mounted in the valve housing (2) through a common mounting opening (29), the pressure regulating valve (15) being mounted detachably in the housing (2), **characterized in that** the pressure regulating valve (15) comprises a tool fixing geometry (31) allowing a demounting tool to be fastened to said pressure regulating valve (15).

2. The valve arrangement according to claim 1, **characterized in that** the tool fixing geometry (31) is made as a thread.

3. The valve arrangement according to claim 1, **characterized in that** the tool fixing geometry (31) is made as part of a bayonet joint.

4. The valve arrangement according to any of claims 1 to 3, **characterized in that** the pressure regulating valve (15) comprises a regulating valve element (18) and a regulating valve seat (17) wherein the fixing geometry (31) is positioned at the regulating valve element (18).

5. The valve arrangement according to claim 4, **characterized in that** the pressure regulating valve (15) comprises a regulating valve housing (16) having a bore (24), the regulating valve element having an end passing through said bore (24), and said end being connected to a fixing element (20) having a diameter which is larger than the diameter of the bore (24).

6. The valve arrangement according to claim 5, **characterized in that** the pressure regulating valve (15) comprises a membrane (19), said membrane (19) being fixed at said regulating valve element (18) by means of said fixing element (20).

7. The valve arrangement according to claim 6, **characterized in that** the fixing element (20) and the regulating valve element (18) are connected by a rivet like connection (21).

8. The valve arrangement according to claim 7, **characterized in that** a radially outer part (25) of the membrane (19) forms a seal which is arranged between the valve housing (2) and the regulating valve housing (16) and sealing a first chamber (26) which is connected to the inlet (3) form a second chamber (27) which is connected to the outlet (4).

9. The valve arrangement according to any of claims 1 to 7, **characterized in that** the flow control valve (5) comprises a control valve element (6) and a control valve seat (7) which is arranged at a seat element (8), said seat element (8) being connected to said pressure regulating valve (15).

10. The valve arrangement according to claim 9, **characterized in that** the seat element (8) and the pressure regulating valve (15) are connected by means of a thread connection or a crimp connection.

11. The valve arrangement according to any of claims 1 to 10, **characterized in that** the flow control valve (5) comprises pre-adjustment means (12), said pre-adjustment means (12) acting on the pressure regulating valve (15) and holding the pressure regulating valve (15) in the valve housing (2).

## Patentansprüche

1. Eine Ventilanordnung (1) mit: einem Ventilgehäuse (2) mit einem Einlass (3) und einem Auslass (4), einem Durchflussregelungsventil (5) angeordnet zwischen dem Einlass (3) und dem Auslass (4), einem Druckregelungsventil (15) angeordnet zwischen dem Einlass (3) und dem Durchflussregelungsventil (5), wobei das Druckregelungsventil (15) und das Durchflussregelungsventil (5) durch eine gemeinsame Öffnung (29) montiert werden und das Druckregelungsventil (15) lösbar im Gehäuse (2) montiert ist, **dadurch gekennzeichnet, dass** das Druckregelungsventil (15) eine Werkzeugbefestigungsgeometrie (31) aufweist, die die Befestigung eines Demontagewerkzeuges am Druckregelungsventil ermöglicht.

2. Ventilanordnung nach Anspruch 1, **dadurch gekennzeichnet, dass** die Werkzeugbefestigungsgeometrie (31) als Gewinde ausgebildet ist.

3. Ventilanordnung nach Anspruch 1, **dadurch gekennzeichnet, dass** die Werkzeugbefestigungsgeometrie (31) als Teil eines Bajonettverschlusses ausgebildet ist.

4. Ventilanordnung nach jedem der Ansprüche 1 bis 3, **dadurch gekennzeichnet, dass** das Druckregelungsventil (15) ein Regelungsventilelement (18) und einen Regelungsventilsitz (18) aufweist, wobei die Befestigungsgeometrie (31) am Regelungsventilelement (18) angebracht ist.

5. Ventilanordnung nach Anspruch 4, **dadurch gekennzeichnet, dass** das Druckregelungsventil (15) ein Regelungsventilgehäuse (16) mit einer Bohrung (24) aufweist, wobei ein Ende des Regelungsventilelementes durch die Bohrung geht und mit einem Befestigungselement (20) verbunden wird, dessen Durchmesser grösser ist als der Durchmesser der Bohrung (24).

6. Ventilanordnung nach Anspruch 5, **dadurch gekennzeichnet, dass** das Druckregelungsventil (15) eine Membran (19) aufweist, die mit Hilfe des Befestigungselements (20) am Regelungsventilelement (18) befestigt ist.

7. Ventilanordnung nach Anspruch 6, **dadurch gekennzeichnet, dass** das Befestigungselement (20) und das Regelungsventilelement (18) mit Hilfe einer nietähnlichen Verbindung (21) verbunden sind.

8. Ventilanordnung nach Anspruch 7, **dadurch gekennzeichnet, dass** ein radialer Außenteil (25) der Membran (19) eine Dichtung bildet, die zwischen dem Ventilgehäuse (2) und dem Regelungsventilgehäuse (16) angeordnet ist und eine erste Kammer (26), die mit dem Einlass (3) verbunden ist, von einer zweiten Kammer (27), die mit dem Auslass (4) verbunden ist, trennt.

9. Ventilanordnung nach jedem der Ansprüche 1 bis 7, **dadurch gekennzeichnet, dass** das Durchflussregelungsventil (5) ein Regelungsventilelement (6) und einen an einem Sitzelement (8) angeordneten Regelungsventilsitz (7) aufweist, wobei das Sitzelement (8) mit dem Druckregelungsventil (15) verbunden ist.

10. Ventilanordnung nach Anspruch 9, **dadurch gekennzeichnet, dass** das Sitzelement (8) und das Druckregelungsventil (15) mit Hilfe einer Gewindeverbindung oder einer Shrumpfverbindung verbunden sind.

11. Ventilanordnung nach jedem der Ansprüche 1 bis 10, **dadurch gekennzeichnet, dass** das Durchflussregelungsventil (5) Voreinstellungsmittel (12) aufweist, die am Druckregelungsventil (15) wirken und das Druckregelungsventil (15) im Gehäuse (2) hält.

## Revendications

1. Agencement de soupapes (1) comprenant : un compartiment de soupapes (2) ayant une entrée (3) et une sortie (4), une soupape de limitation de débit (5) disposée entre l'entrée (3) et la sortie (4), une soupape de régulation de pression (15) disposée entre l'entrée (3) et la soupape de limitation de débit (5), dans lequel la soupape de régulation de pression (15) et la soupape de limitation de débit (5) sont montées dans le compartiment de soupapes (2) à travers une ouverture commune de montage (29), la soupape de régulation de pression (15) étant montée de manière amovible dans le compartiment (2), **caractérisé en ce que** la soupape de régulation de pression (15) comprend une géométrie de fixation d'outil (31) permettant de fixer un outil de démontage sur ladite soupape de régulation de pression (15).

2. Agencement de soupapes selon la revendication 1, **caractérisé en ce que** la géométrie de fixation d'outil (31) est formée comme un filetage.

3. Agencement de soupapes selon la revendication 1, **caractérisé en ce que** la géométrie de fixation d'outil (31) est formée comme une partie d'un joint à baïonnette.

4. Agencement de soupapes selon l'une quelconque des revendications 1 à 3, **caractérisé en ce que** la soupape de régulation de pression (15) comprend un élément de soupape de régulation (18) et un siège de soupape de régulation (17), dans lequel la géométrie de fixation d'outil (31) est positionnée sur l'élément de soupape de régulation (18).

5. Agencement de soupapes selon la revendication 4, **caractérisé en ce que** la soupape de régulation de pression (15) comprend un boîtier de soupape de régulation (16) ayant un alésage (24), l'élément de soupape de régulation ayant une extrémité passant à travers ledit alésage (24), et ladite extrémité étant raccordée à un élément de fixation (20) ayant un diamètre qui est supérieur au diamètre de l'alésage (24).

6. Agencement de soupapes selon la revendication 5, **caractérisé en ce que** la soupape de régulation de pression (15) comprend une membrane (19), ladite membrane (19) étant fixée sur ledit élément de soupape de régulation (18) au moyen dudit élément de fixation (20).

7. Agencement de soupapes selon la revendication 6, **caractérisé en ce que** l'élément de fixation (20) et l'élément de soupape de régulation (18) sont raccordés par un raccord à rivet (21).

8. Agencement de soupapes selon la revendication 7, **caractérisé en ce qu'**une partie radialement extérieure (25) de la membrane (19) forme un joint d'étanchéité qui est disposé entre le compartiment de soupapes (2) et le boîtier de soupape de régulation (16) et rend étanche une première chambre (26) qui est reliée à l'entrée (3) par rapport à une deuxième chambre (27) qui est reliée à la sortie (4).

9. Agencement de soupapes selon l'une quelconque des revendications 1 à 7, **caractérisé en ce que** la soupape de limitation de débit (5) comprend un élément de soupape de commande (6) et un siège de soupape de commande (7) qui est disposé sur un élément de siège (8), ledit élément de siège (8) étant raccordé à ladite soupape de régulation de pression (15).

10. Agencement de soupapes selon la revendication 9, **caractérisé en ce que** ledit élément de siège (8) et la soupape de régulation de pression (15) sont raccordés au moyen d'un raccord à filetage ou d'un raccord à sertissage.

11. Agencement de soupapes selon l'une quelconque des revendications 1 à 10, **caractérisé en ce que** la soupape de limitation de débit (5) comprend un moyen de préréglage (12), ledit moyen de préréglage (12) agissant sur la soupape de régulation de pression (15) et maintenant la soupape de régulation de pression (15) dans le compartiment de soupapes (2).
